# EUROPEAN PATENT SPECIFICATION

(11) **EP 1 902 897 B1**
(45) Date of publication and mention of the grant of the patent: **15.06.2011**
(21) Application number: 07075815.6
(22) Date of filing: 18.09.2007
(51) Int. Cl.: B60N 2/28

(54) **Child seat**
Kindersitz
Siège enfant

(30) Priority: 21.09.2006 NL 1032549
(43) Date of publication of application: 26.03.2008
(73) Proprietor: Maxi Miliaan B.V., 5704 RD Helmond (NL)
(72) Inventor: Mostert, Marc, 6131 BL Sittard (NL); van Diepen, Paulus Adrianus Jacobus, 2512 ET Den Haag (NL)
(74) Representative: Veldman-Dijkers, Cornelia G. C.

(56) References cited:
- EP-A- 1 433 653
- EP-A- 1 564 065
- US-A1- 2002 145 318
- US-A1- 2002 195 867
- US-A1- 2005 110 318

## Description

The present invention relates to a child seat comprising a seat portion, a back support and shoulder belts extending through at least one opening in said back support, which opening is movable relative to the seat portion from at least one first position to a second position, and vice versa.

With such a child seat, which is known from US-A1-2005/0110318, which has all the features of the preamble of claim 1, the shoulder belts extend through two openings located side-by-side in the back support. The shoulder belts form part of a five-point harness system, by means of which a child can be secured in the child seat. The child seat is suitable inter alia for use as a child vehicle seat. By moving the openings relative to the seat portion, the shoulder belts can be adjusted to accommodate the size of the child. In the case of a comparatively small child, the openings will be located close to the seat portion, whilst in the case of a larger child a larger distance between the seat portion and the openings is required in order to realise a more comfortable and safer fit of the shoulder belts.

With the child seat according to said US patent application, locking means are disengaged from locking elements against spring force in order to move the openings. Said disengagement takes place from a side remote from the seat, the so-called rear side of the child seat.

The openings are then moved towards the seat portion or away from the seat portion by a user. If a user releases the locking means before the locking means are positioned opposite the locking elements, this will result in an undesirable and possibly unsafe situation. In the event of a collision, the openings, and thus the shoulder belts, may be moved away from or towards the seat portion in an undefined manner, as a result of which a child seated in the child seat may be moved undesirably.

The object of the invention is to provide a child seat in which the above disadvantages are avoided.

This object is accomplished with the child seat according to the invention in that the child seat furthermore comprises at least one spring which, upon movement of the opening, is deformable under spring force from a bent shape associated with said first position, through a plane extending between the spring ends, to a bent shape associated with said second position, and vice versa.

The spring has a bent shape both in said first position and in said second position, which shapes are mirror-symmetrical, for example, relative to a plane extending through the ends of the spring.

The spring will be deformed against the spring force when the opening is moved from the first position to the second position. Once the spring has been moved through said plane, the spring will support the movement of the opening from the first position to the second position, and the opening will be urged to the second position under spring force. The same takes place upon movement of the opening from the second position to the first position.

If the opening is not moved entirely to the second position by the user during said movement from the first position to the second position, the spring force exerted by the spring will move the opening either back to the first position or forward to the second position. In this way the opening will be either in the first position or in the second position at all times.

One embodiment of the child seat according to the invention is characterised in that the back support comprises at least a first portion and a second portion, each portion being provided with one opening through which the shoulder belts extend, which portions are movable relative to each other, the first portion being connected to the spring ends and the second portion being connected to the spring at positions between said ends.

In this way a simple connection between the portions that are movable relative to each other and the spring is realised.

Another embodiment of the child seat according to the invention is characterised in that said first portion is provided with locking elements, whilst the second portion is provided with locking means, or vice versa, which locking means are in engagement with said locking elements under spring force in said first and/or said second position of the opening, whilst the locking means can be disengaged from the locking elements against said spring force.

The opening is locked in said first or said second position by the locking means mating with the locking elements and cannot be moved undesirably from the first position to the second position or vice versa.

Yet another embodiment of the child seat according to the invention is characterised in that the locking means can be operated from a front side of the child seat located on the same side as the seat portion.

Said front side is within easy reach in the mounted position of a child seat in a vehicle.

Yet another embodiment of the child seat according to the invention is characterised in that the locking elements comprise at least two pairs of recesses located opposite each other, whilst the locking means comprise catches, which are positioned in a pair of recesses under spring force.

Such catches engaging in recesses are of relatively simple design, they are relatively easy to manufacture and relatively easy to operate.

Yet another embodiment of the child seat according to the invention is characterised in that each catch is provided with a hole, in which a user can position his or her fingers from the front side of the child seat.

The user only needs to insert his or her fingers into the holes of the two catches that are positioned in the recesses, and move said catches towards each other against spring force. As a result, the catches are moved out of the recesses, after which the opening can be moved from the first position to the second position, or vice versa. This is a comparatively simple operating method.

Yet another embodiment of the child seat according to the invention is characterised in that the first portion is provided with a slot extending from the seat portion, whilst the second portion is provided with a pin which is movably accommodated in said slot, or vice versa, wherein pin positions located near the ends of said slot are associated with the first and the second position of the shoulder belts.

Such a slot mating with a pin unequivocally defines the two extreme positions of the first and the second portion relative to each other.

The invention will now be explained in more detail with reference to the drawings, in which:
Figure 1 is a perspective view of a child seat according to the invention, without belts;
Figure 2 is a detail view of the child seat of figure 1, showing openings in a first position thereof;
Figure 3 is a perspective view of a part of the child seat of figure 1;
Figure 4 is a cutaway perspective view of the part shown in figure 3;
Figure 5 is a perspective view of the child seat according to the invention, which is provided with shoulder belts;
Figure 6 is a detail view of the child seat of figure 5, in which locking means are being disengaged;
Figure 7 is a view corresponding to figure 3 during disengagement of the locking means;
Figure 8 is a view corresponding to figure 4 during disengagement of the locking means;
Figure 9 is a view corresponding to figure 5 during movement of the openings;
Figure 10 is a view corresponding to figure 6 during movement of the openings;
Figure 11 is a view corresponding to figure 7 during movement of the openings;
Figure 12 is a view corresponding to figure 8 during movement of the openings;
Figure 13 is a view corresponding to figure 1, in which the openings are shown in a second position instead of in the first position;
Figure 14 is a view corresponding to figure 2, in which the openings are shown in the second position;
Figure 15 is a view corresponding to figure 3, in which the openings are shown in the second position; and
Figure 16 is a view corresponding to figure 4, in which the openings are shown in the second position.

Like parts are indicated by the same numerals in the figures.

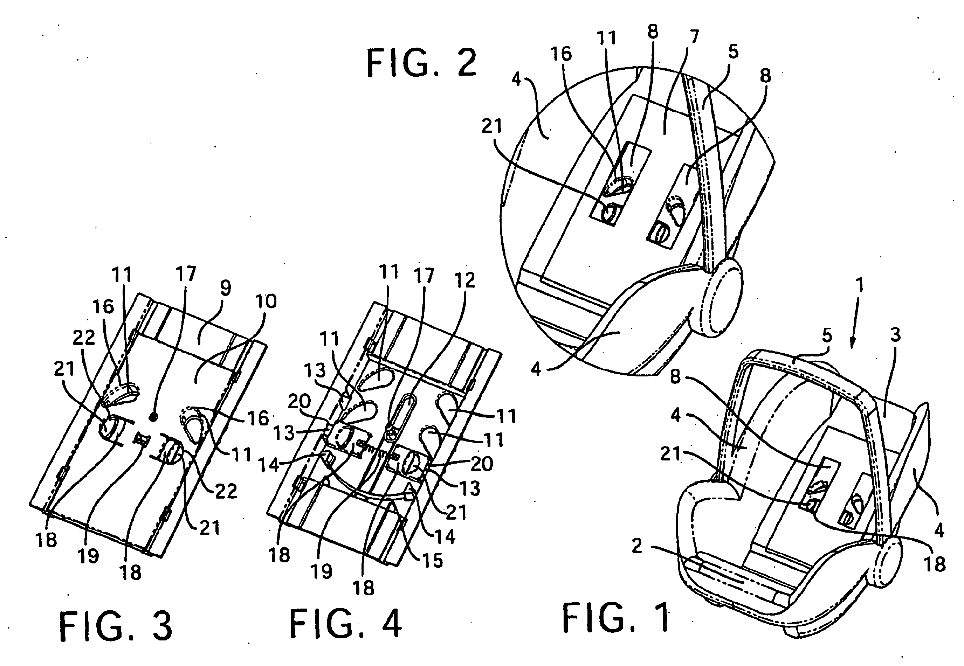

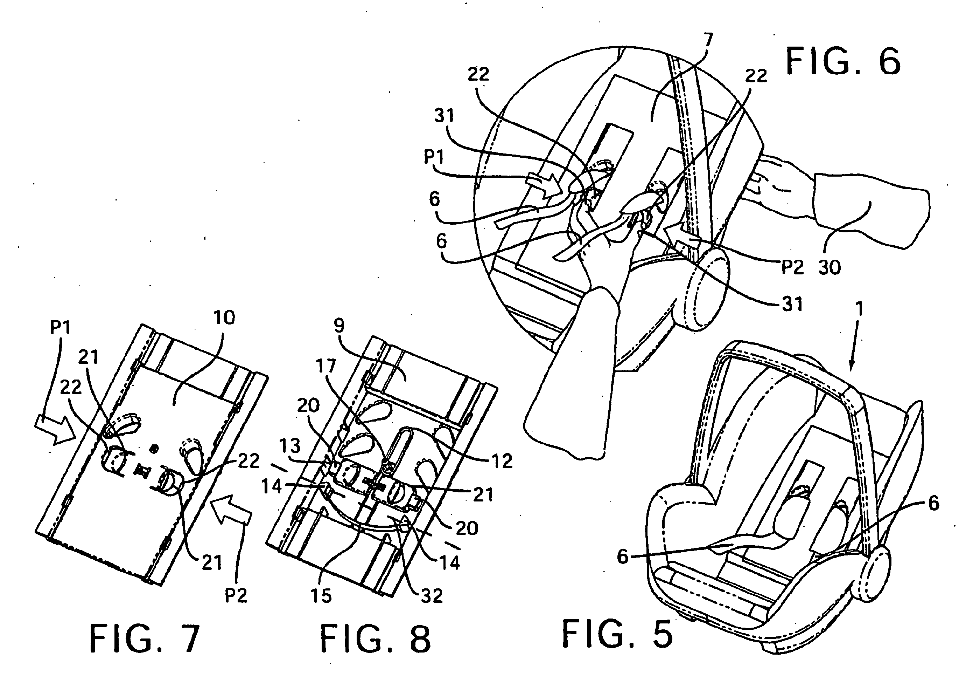

Figure 1 shows a child seat 1 comprising a seat portion 2, a back support 3 joining the seat portion 2, and lateral supports 4 present on either side of the seat portion and the back support 3. The child seat 1 further comprises a carrying bracket 5. The child seat also comprises a five-point harness system (not shown) which is known per se, two shoulder belts 6 of which are shown in figures 5, 6, 9 and 10. Such a child seat is known per se, for example from US-A1-2005/0110318, and will not be explained in more detail herein, therefore.

Figures 2, 3 and 4 are detail views of the child seat 1 shown in figure 1, which show clearly that the back support 3 is provided with a cover plate 7, in which two slots 8 extending parallel to each other are present. Positioned under said cover plate 7 are a first portion 9 and a second portion 10, which is located between said first portion 9 and the cover plate 7. The first portion 9 is rigidly connected to the back support 3. The first portion 9 is provided with two pairs of openings 11 and with a slot 12 located therebetween, which slot extends transversely to the seat portion 2. The first portion 9 is furthermore provided with two pairs of recesses 13 forming locking elements, as well as with two V-shaped holders 14, in which ends of a leaf spring 15 are positioned.

The second portion 10 is provided with a pair of openings 16 corresponding to the openings 11, a pin 17 extending into said slot 12 and two catches 18 forming locking means, which can be moved towards each other against the spring force of a spring 19. Each catch has an end 20, which mates with a recess 13, and a hole 21 located between the spring 19 and the end 20. The holes 21 in the catches 18 are located opposite passages 22 in the second portion 10.

In the first position of the openings 16 shown in figures 1-4, the shoulder belts 6 extending through the back support 3 are positioned relatively close to the seat portion 2. Such a position of the shoulder belts 6 is in particular suitable for use with comparatively small children. Each shoulder belt 6 extends through an opening 11 and an opening 16. An adequate locking engagement of the second portion 10 with respect to the first portion 9 is realised by the ends 20 of the catches 18 positioned in the recesses 13, so that the second portion 10 cannot be moved undesirably with respect to the first portion 9.

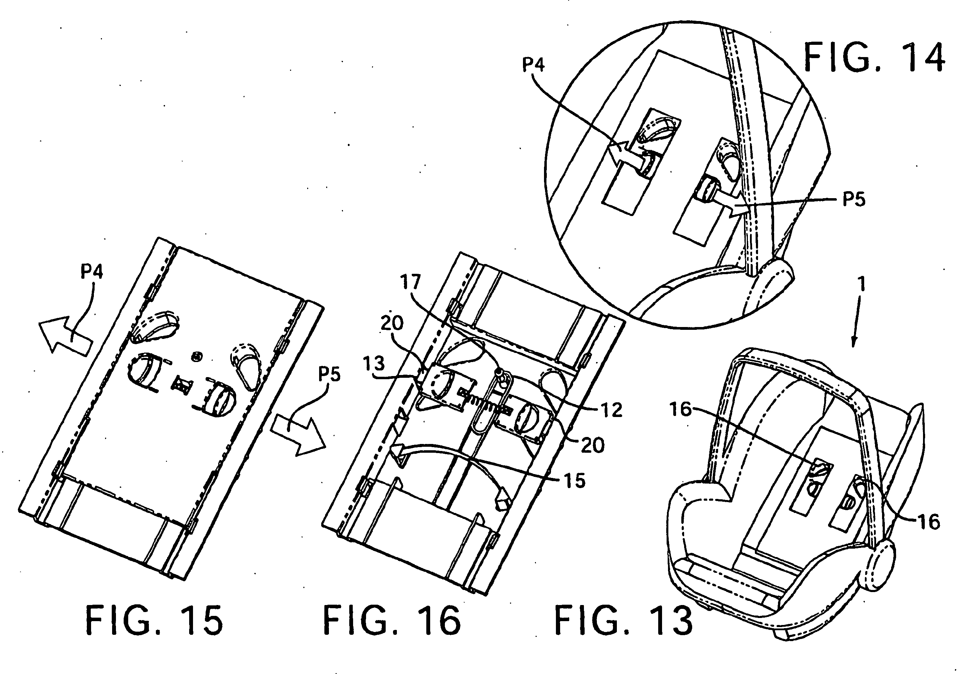

The operation of the child seat 1 will now be explained with reference to figures 5-13. If a user 30 wishes to move the openings 16 from a relatively low first position to a relatively high second position, the user 30 will insert his or her fingers 31 into the holes 21 of the catches 18 via the passages 22. The user 30 will then move his or her fingers 31, and thus the catches 18, towards each other in the directions indicated by the arrows P1, P2. This causes the catches 18 to be moved towards each other against the spring force of the spring 19, causing the ends 20 to be moved out of the recesses 13 in the first portion 9.

In the first position, the leaf spring 15 takes up a bent shape relative to a plane 32 extending through the ends of the leaf spring 15. In this position, the pin 17 abuts against one end of the slot 12. If the user would take his or her fingers 31 out of the holes 21, the pin 17 would be pressed firmly against the bottom end of the slot 12 under the influence of the leaf spring 15. The catches 18 would be moved apart under the influence of the spring 19 and be positioned in the recesses 13 in that case, thus locking the second portion 10 against movement with respect to the first portion 9 again.

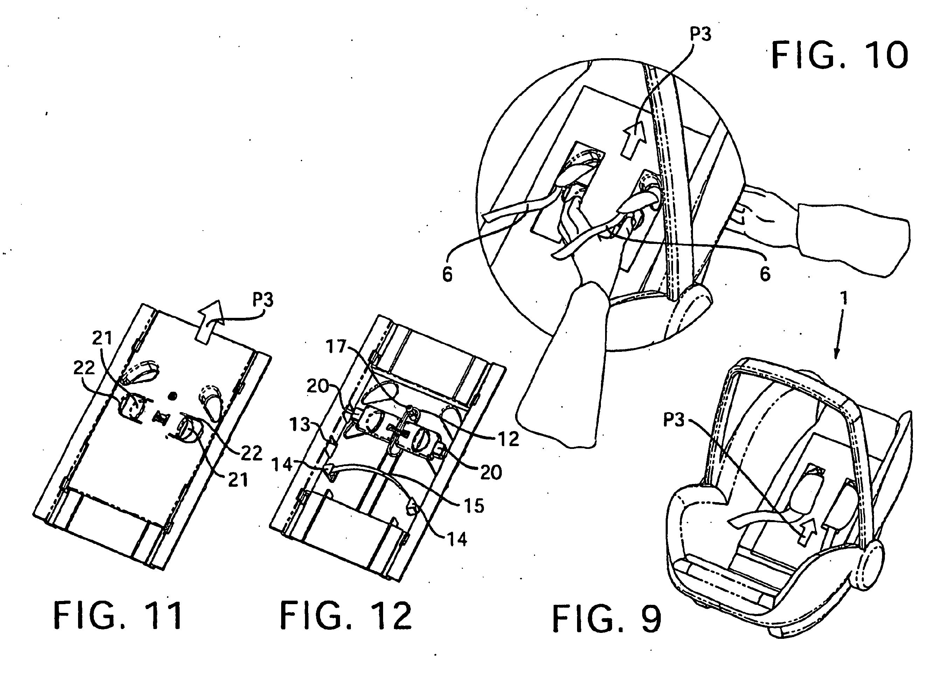

If the user 30 wishes to move the openings 16 to the second position, however, the user 30 will move the second portion 10 from the situation shown in figures 6-8 in a direction away from the seat portion 2, as indicated by the arrow P3 (see figures 9-12). During said movement, the leaf spring 15 will first be deformed against spring force until the leaf spring 15 passes the plane 32, whereupon the leaf spring 15 is moved to the bent shape shown in figure 12 under spring force. The user will clearly perceive the moment when the spring passes the plane 32. The user moves the second portion 10 in the direction indicated by the arrow P3 until the pin 17 abuts against an end of the slot 12 remote from the seat portion 2, in which position the ends 20 of the catches 18 are positioned opposite another pair of recesses 13. When the user now takes his or her fingers out of the opening, the ends 20 will be positioned in the recesses 13 in the directions indicated by the arrows P4, P5 under the influence of the spring force of the spring 19. The second portion 10 is now locked against movement with respect to the first portion 9 again. The openings 16 are now in the second position.

It is also possible to design the portions 9, 10 so that the catches 18 can be operated from a rear side of the child seat 1.

According to another possibility, the child seat 1 is not provided with locking means that mate with locking elements, in which case the second portion 10 is retained in the first position or in the second position only by the leaf spring 15.

The child seat may also be provided with a three-point seat belt instead of with a five-point seat belt.

Instead of using a leaf spring it is also possible to use a coil spring which takes up a bent shape in both positions.

The second pair of openings 11 may be left out when using the invention.

## Claims

1. A child seat comprising a seat portion (2), a back support (3) and shoulder belts (6) extending through at least one opening (11) in said back support, which opening is movable relative to the seat portion from a first position to a second position, and vice versa, **characterised in that** the child seat furthermore comprises at least one spring (15) which, upon movement of the opening (11), is deformable under spring force from a bent shape associated with said first position, through a plane extending between the spring ends, to a bent shape associated with said second position, and vice versa.

2. A child seat according to claim 1, **characterised in that** the back support comprises at least a first portion (9) and a second portion (10), each portion being provided with one opening through which the shoulder belts extend, which portions are movable relative to each other, the first portion being connected to the spring ends and the second portion being connected to the spring at positions between said ends.

3. A child seat according to claim 2, **characterised in that** said first portion is provided with locking elements, whilst the second portion is provided with locking means, or vice versa, which locking means are in engagement with said locking elements under spring force in said first and/or said second position of the opening, whilst the locking means can be disengaged from the locking elements against said spring force.

4. A child seat according to claim 3, **characterised in that** the locking means can be operated from a front side of the child seat located on the same side as the seat portion.

5. A child seat according to claim 3 or 4, **characterised in that** the locking elements comprise two pairs of recesses (13) located opposite each other, whilst the locking means comprise catches (18), which are positioned in a pair of recesses under spring force.

6. A child seat according to claim 5, **characterised in that** each catch is provided with a hole, in which a user can position his or her fingers from the front side of the child seat.

7. A child seat according to any once of the preceding claims, **characterised in that** the first portion is provided with a slot (12) extending from the seat portion, whilst the second portion is provided with a pin which is movably accommodated in said slot, or vice versa, wherein pin positions located near the ends of said slot are associated with the first and the second position of the shoulder belts.

## Patentansprüche

1. Kindersitz mit einem Sitzabschnitt (2), einer Rückenlehne (3) und mit durch mindestens eine Öffnung (11) in der Rückenlehne verlaufenden Schultergurten (6), wobei die Öffnung relativ zum Sitzabschnitt aus einer ersten Lage in eine zweite Lage und umgekehrt bewegt werden kann, **dadurch gekennzeichnet, dass** der Kindersitz ferner mindestens eine Feder (15) umfasst, die durch die Bewegung der Öffnung (11) unter Federkraft aus einer zur ersten Lage gehörenden gebogenen Gestalt durch eine zwischen den Federenden verlaufende Ebene in eine zur zweiten Lage gehörende gebogene Gestalt und umgekehrt verformbar ist.

2. Kindersitz nach Anspruch 1, **dadurch gekennzeichnet, dass** die Rückenlehne midestens einen ersten Abschnitt (9) und einen zweiten Abschnitt (10) umfasst, wobei jeder Abschnitt mit einer Öffnung versehen ist, durch die die Schultergurte verlaufen, und wobei die Abschnitte gegeneinander beweglich sind, und wobei der erste Abschnitt mit den Federenden und der zweite Abschnitt mit der Feder an Stellen zwischen den Enden verbunden ist.

3. Kindersitz nach Anspruch 2, **dadurch gekennzeichnet, dass** der erste Abschnitt mit Riegelelementen und der zweite Abschnitt mit Verriegelungsmitteln oder umgekehrt versehen ist, wobei in der ersten und/oder in der zweiten Lage der Öffnung die Verriegelungsmittel unter Federkraft in Eingriff mit den Riegelelementen sind, wobei die Verriegelungsmittel gegen die Federkraft von den Riegelelementen gelöst werden können.

4. Kindersitz nach Anspruch 3, **dadurch gekennzeichnet, dass** die Verriegelungsmittel von der Vorderseite das Kindersitzes betätigt werden können, die sich auf derselben Seite wie der Sitzabschnitt befindet.

5. Kindersitz nach Anspruch 3 oder 4, **dadurch gekennzeichnet, dass** die Riegelelemente zwei Paar Ausnehmungen (13) umfassen, die einander gegenüberliegen, während die Verriegelungsmittel Riegel (18) umfassen, die unter Federkraft in einem Paar Ausnehmungen liegen.

6. Kindersitz nach Anspruch 5, **dadurch gekennzeichnet, dass** jeder Riegel mit einem Loch versehen ist, in welches der Benutzer/die Benutzerin von der Vorderseite des Kindersitzes her seine/ihre Finger einsetzen kann.

7. Kindersitz nach einem der vorangehenden Ansprüche, **dadurch gekennzeichnet, dass** der erste Abschnitt mit einem sich vom Sitzabschnitt erstreckenden Schlitz (12) versehen ist, während der zweite Abschnitt mit einem beweglich in diesem Schlitz untergebrachten Stift versehen ist oder umgekehrt, wobei die Stiftlagen nahe den Enden dieses Schlitzes der ersten und der zweiten Lage des Schultergurts zugeordnet sind.

## Revendications

1. Siège de sécurité pour enfant comprenant une partie siège (2), un support dorsal (3) et des ceintures d'épaule (6) qui s'étendent à travers au moins une ouverture (11) dans ledit support dorsal, laquelle ouverture est mobile par rapport à la partie siège à partir d'une première position jusqu'à une seconde position, et vice versa, **caractérisé en ce que** le siège de sécurité pour enfant comprend en outre au moins un ressort (15) qui, lors d'un déplacement de l'ouverture (11), peut se déformer sous la force du ressort à partir d'une forme fléchie associée à ladite première position, à travers un plan qui s'étend entre les extrémités du ressort, jusqu'à une forme fléchie associée à ladite seconde position, et vice versa.

2. Siège de sécurité pour enfant selon la revendication 1, **caractérisé en ce que** le support dorsal comprend au moins une première partie (9) et une seconde partie (10), chaque partie étant dotée d'une ouverture à travers laquelle s'étendent les ceintures d'épaule, lesquelles parties sont mobiles l'une par rapport à l'autre, la première partie étant reliée aux extrémités du ressort et la seconde partie étant reliée au ressort à des positions situées entre lesdites extrémités.

3. Siège de sécurité pour enfant selon la revendication 2, **caractérisé en ce que** ladite première partie est dotée d'éléments de verrouillage, tandis que la seconde partie est dotée de moyens de verrouillage, ou vice versa, lesquels moyens de verrouillage sont mis en prise avec lesdits éléments de verrouillage sous la force du ressort dans ladite première position et/ou ladite seconde position de l'ouverture, tandis que les moyens de verrouillage peuvent être mis hors de prise des éléments de verrouillage contre ladite force du ressort.

4. Siège de sécurité pour enfant selon la revendication 3, **caractérisé en ce que** les moyens de verrouillage peuvent être actionnés à partir d'un côté avant du siège de sécurité pour enfant situé du même côté que la partie siège.

5. Siège de sécurité pour enfant selon la revendication 3 ou 4, **caractérisé en ce que** les éléments de verrouillage comprennent deux paires d'évidements (13) situés à l'opposé l'un de l'autre, tandis que les moyens de verrouillage comprennent des encliquetages (18), qui sont positionnés dans une paire d'évidements sous la force du ressort.

6. Siège de sécurité pour enfant selon la revendication 5, **caractérisé en ce que** chaque encliquetage est doté d'un trou, dans lequel un utilisateur peut placer ses doigts à partir du côté avant du siège de sécurité pour enfant.

7. Siège de sécurité pour enfant selon l'une quelconque des revendications précédentes, **caractérisé en ce que** la première partie est dotée d'une fente (12) qui s'étend à partir de la partie siège, tandis que la seconde partie est dotée d'une broche qui est reçue de manière mobile dans ladite fente, ou vice versa, dans lequel les positions de la broche situées à proximité des extrémités de ladite fente sont associées à la première position et à la seconde position des ceintures d'épaule.
